# EUROPEAN PATENT APPLICATION

(11) **EP 4 737 865 A1**
(43) Date of publication of application: **06.05.2026**
(21) Application number: 25211793.2
(22) Date of filing: 28.10.2025
(51) Int. Cl.: G01F 1/44

(54) **SENSOR APPARATUS**

(30) Priority: 30.10.2024 JP 2024190617
(71) Applicant: MMI Semiconductor Co., Ltd., Tokyo, 206-8567 (JP)
(72) Inventor: NIMURA, Toshihiko, YASU-SHI, 5202362 (JP); KAMEI, Makoto, YASU-SHI, 5202362 (JP); KUROSE, Izumi, YASU-SHI, 5202362 (JP)
(74) Representative: Regimbeau

(57) **Abstract**

A sensor apparatus, includes: a casing in which a first opening and a second opening are formed; a first flow channel formed in the casing and that communicates with the first opening and the second opening to form a flow of fluid from the first opening to the second opening; a pressure changer formed in the first flow channel and that is configured to change the pressure of the fluid flowing through the first flow channel; a second flow channel which branches from the first flow channel on an upstream side relative to the pressure changer; and a third flow channel which communicates with the second flow channel and in which a detector of a sensor chip is arranged.

## Description

### BACKGROUND

### 1. Field of the Invention

The present disclosure relates to a sensor apparatus.

### 2. Description of the Related Art

For example, there is known a flow rate measuring device including a housing including a bypass channel that takes in a part of the air flowing through a duct, and a flow sensor chip including a detection surface portion arranged in the bypass channel and generating an electric signal that corresponds to the flow rate of the air in the duct by heat transfer with the air flowing through the bypass channel (for example, see Japanese Laid-Open Patent Application No. 2022-153665).

For example, there is known a measurement device for measuring a mass flow rate of a flow medium flowing through a piping, in which a measuring element is arranged in a measuring passage including a range having a plurality of different radii of curvature (for example, see Japanese Laid-Open Patent Application No. 2008-197122).

### SUMMARY

In a sensor apparatus in which a sensor chip is disposed inside a flow channel branching from a main flow channel (first flow channel), when it is difficult to cause a fluid flowing through the main flow channel to flow into the flow channel branching from the main flow channel, measurement by the sensor chip may be difficult.

Provided is a sensor apparatus in which fluid flowing through the first flow channel can smoothly flow into the flow channel branching from the first flow channel.

A sensor apparatus according to one embodiment of the present disclosure includes: a casing in which a first opening and a second opening are formed; a first flow channel formed in the casing and that communicates with the first opening and the second opening to form a flow of fluid from the first opening to the second opening; a pressure changer formed in the first flow channel and that is configured to change the pressure of the fluid flowing through the first flow channel; a second flow channel which branches from the first flow channel on an upstream side relative to the pressure changer; and a third flow channel which communicates with the second flow channel and in which a detector of a sensor chip is arranged, wherein the first flow channel includes a curved portion forming an arc when viewed in a first direction, the curved portion being formed upstream of the pressure changer, wherein, in a cross section crossing the first direction, the curved portion includes a first surface and a second surface which face each other in a direction along a radius of curvature of the curved portion, and wherein the second surface is disposed closer to the center of curvature of the curved portion as compared with the first surface, and a third opening is formed in the second surface as a connection portion connecting the first flow channel and the second flow channel.

The present disclosure provides a sensor apparatus capable of smoothly flowing a fluid flowing through a first flow channel into a third flow channel provided with a sensor chip.

### BRIEF DESCRIPTION OF THE DRAWINGS

FIG. 1 is a cross-sectional view illustrating a sensor apparatus according to an embodiment;
FIG. 2 is a plan view illustrating a main flow channel, sub-flow channels, and a sensor chip flow channel formed in a flow channel plate;
FIG. 3 is an enlarged plan view illustrating the main flow channel and the sub-flow channel in the vicinity of a first opening;
FIG. 4 is an enlarged plan view illustrating the main flow channel and the sub-flow channel in the vicinity of a second opening;
FIG. 5 is an enlarged bottom view illustrating an enlarged view of the sensor chip flow channel, the sub-flow channel, and a dead-end structure; and
FIG. 6 is a cross-sectional view illustrating the first opening, the main flow channel, the sub-flow channel, and the dead-end structure.

### DETAILED DESCRIPTION OF THE PRESENT DISCLOSURE

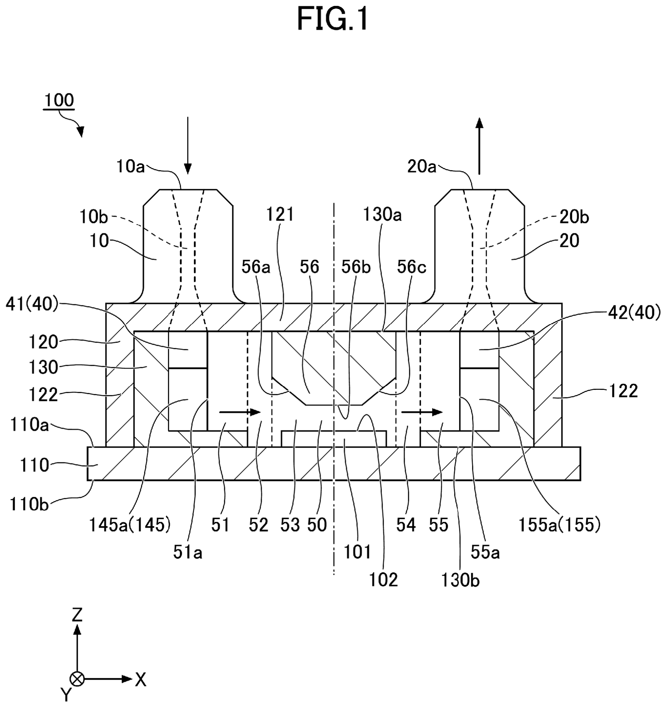

The sensor apparatus according to the embodiment will be described in the following with reference to the attached drawings. In the present specification and the drawings, the substantially identical components may be denoted by the same reference numerals, thereby eliminating redundant descriptions. In the present specification, the terms "top" and "bottom" may be used. These are "top" and "bottom" in the state as illustrated in FIG. 1. In a Z-axis direction, the side where a first opening 10a and a second opening 20a are arranged is "top", and the side where a substrate 110 is arranged is "bottom". The actual arrangement of a sensor apparatus 100 is not limited to the above.

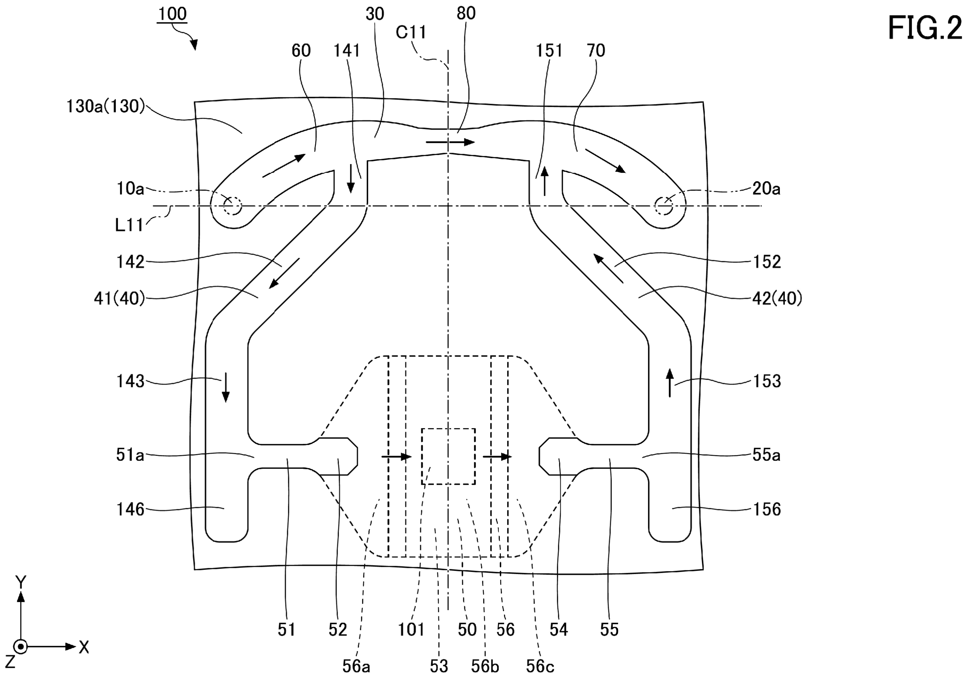

In the description of the sensor apparatus 100, the term "flow direction" may be used. The "flow direction" is basically a fluid flow direction when the fluid flowing in from the first opening 10a is discharged from the second opening 20a. The fluid flow direction in this case is illustrated by arrows in FIG. 2. The sensor apparatus 100 according to the embodiment can be used by flowing the fluid such that the fluid flowing in from the second opening 20a is discharged from the first opening 10a. When the fluid flowing in from the second opening 20a is discharged from the first opening 10a, the fluid flow direction is in the opposite direction.

### [Sensor apparatus 100 according to embodiment]

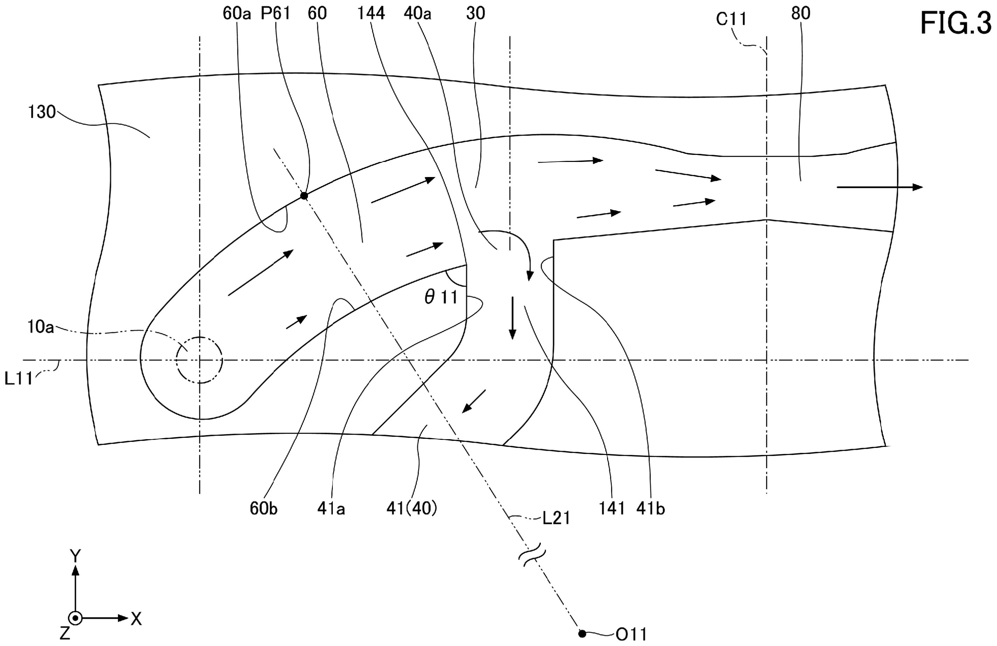

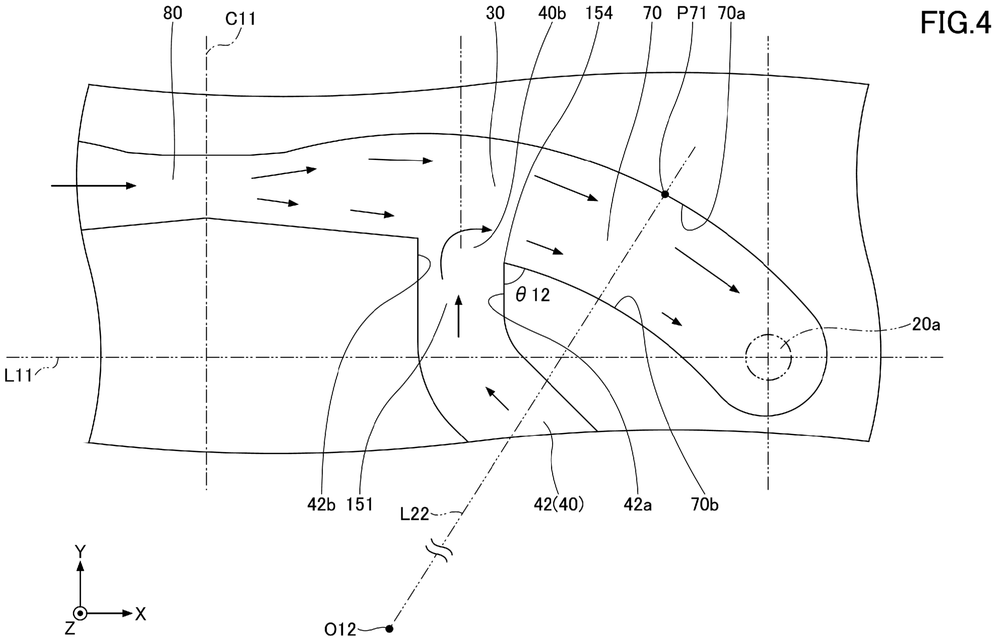

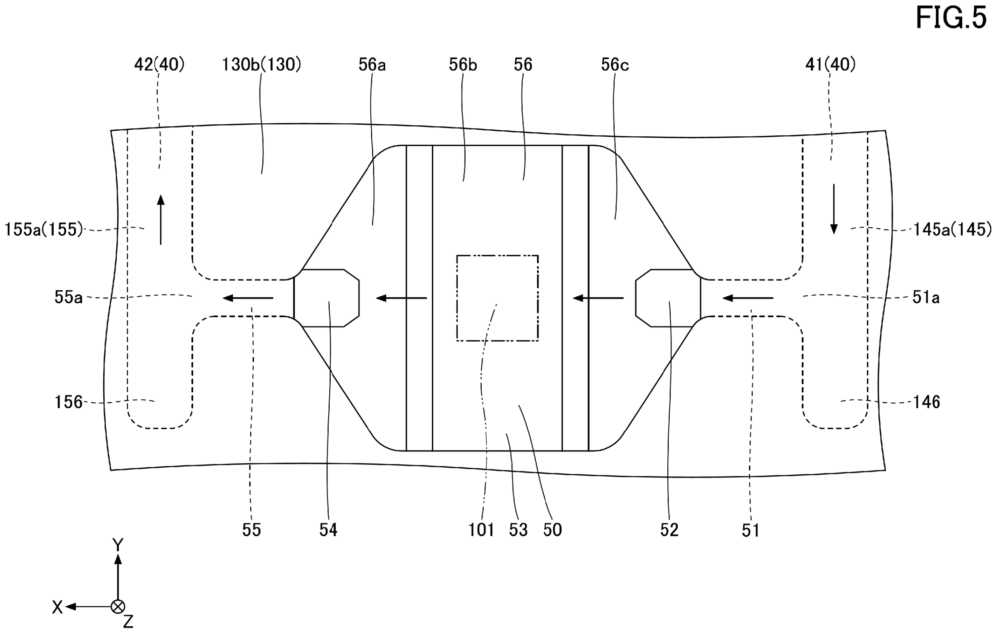

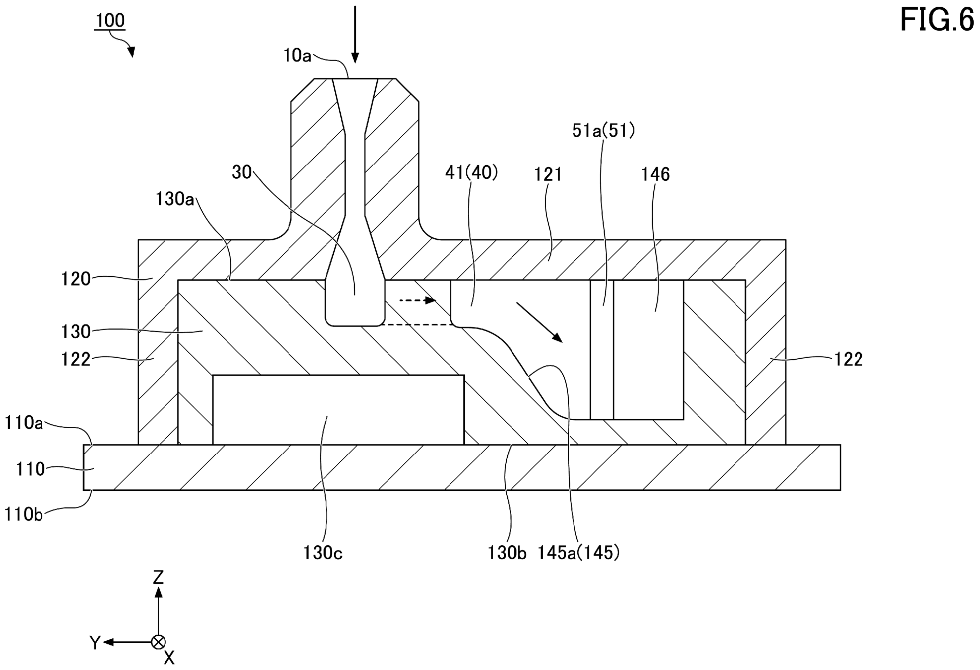

FIG. 1 is a cross-sectional view illustrating the sensor apparatus 100 according to the embodiment. FIG. 2 is a plan view illustrating a main flow channel 30, sub-flow channels 40, and a sensor chip flow channel 50 formed in a flow channel plate 130. FIG. 3 is an enlarged plan view illustrating the main flow channel 30 and the sub-flow channel 40 in the vicinity of the first opening 10a. FIG. 4 is an enlarged plan view illustrating the main flow channel 30 and the sub-flow channel 40 in the vicinity of the second opening 20a. FIG. 5 is an enlarged bottom view illustrating the sensor chip flow channel 50, the sub-flow channels 40, and dead-end structures 146 and 156. FIG. 6 is a cross-sectional view illustrating the first opening 10a, the main flow channel 30, the sub-flow channels 40, and the dead-end structure 146.

In each drawing, arrows indicating mutually orthogonal X-axis direction, Y-axis direction, and Z-axis direction are illustrated. The X-axis direction, Y-axis direction, and Z-axis direction need not necessarily be orthogonal to each other. The X-axis direction, Y-axis direction, and Z-axis direction may be directed in any direction. The X-axis direction includes the direction indicated by an X-axis arrow and a reverse direction indicated by the arrow. The Y-axis direction includes the direction indicated by a Y-axis arrow and a reverse direction indicated by the arrow. The Z-axis direction includes the direction indicated by a Z-axis arrow and a reverse direction indicated by the arrow.

The sensor apparatus 100 as illustrated in FIG. 1 may be, for example, a flow sensor capable of detecting the flow rate of the fluid flowing through the flow channel. The sensor apparatus 100 may be a flow rate sensor capable of detecting the flow rate of the fluid or a differential pressure sensor capable of detecting the differential pressure of the fluid. The flow channel to which the sensor apparatus 100 is connected may be a duct, a piping, or any other flow channel. The fluid may be a gas or a liquid. The fluid may include a powder such as dust. The gas may be air or other gases, for example.

### [Substrate 110]

As illustrated in FIGS. 1 and 6, the sensor apparatus 100 includes the substrate 110, a casing 120, and the flow channel plate 130. The thickness direction of the substrate 110 is along the Z-axis direction. The substrate 110 includes an upper surface 110a and a lower surface 110b which face each other in the Z-axis direction. A sensor chip 101 is disposed on the upper surface 110a. Wiring and electronic components are mounted on the upper surface 110a.

### [Casing 120]

The casing 120 is arranged on the upper surface 110a. The casing 120 covers most of the upper surface 110a. The casing 120 includes, for example, a top plate 121 and a plurality of side plates 122, and has a box shape. The thickness direction of the top plate 121 is along the Z-axis direction. The top plate 121 is arranged apart from the substrate 110 in the Z-axis direction. The top plate 121 has, for example, a rectangular shape when viewed in the Z-axis direction. The shape of the top plate 121 is not limited to a rectangular shape, but may be circular or any other shape. The casing 120 includes, for example, four side plates 122. A total of four side plates 122 extend in the Z-axis direction from sides of the rectangular top plate 121.

### [Ports 10 and 20]

The casing 120 includes a first port 10 including the first opening 10a and a second port 20 including the second opening 20a. The first port 10 and the second port 20 both have a cylindrical shape and extend in the Z-axis direction from the top plate 121 to the side opposite to the side plates 122. A flow channel 10b communicating with the first opening 10a is formed inside the first port 10, and the flow channel 10b extends to the inside of the casing 120. A flow channel 20b communicating with the second opening 20a is formed inside the second port 20, and the flow channel 20b extends to the inside of the casing 120. The flow channels 10b and 20b communicate with the main flow channel 30 formed inside the casing 120.

### [Flow channel plate 130]

The flow channel plate 130 is arranged in a space surrounded by the top plate 121, the plurality of side plates 122, and the substrate 110, as illustrated in FIG. 2. The main flow channel 30, the sub-flow channels 40, and the sensor chip flow channel 50 are formed in the flow channel plate 130. The main flow channel 30, the sub-flow channels 40, and the sensor chip flow channel 50 communicate with each other. The thickness direction of the flow channel plate 130 is along the Z-axis direction. The flow channel formed by the flow channel plate 130 disposed inside the casing 120 is a flow channel formed inside the casing 120. The space surrounded by the casing 120 and the substrate 110 is the space inside the casing 120.

The flow channel plate 130 includes an upper surface 130a and a lower surface 130b which face each other in the Z-axis direction. On the upper surface 130a, the main flow channel 30, the sub-flow channels 40, a part of the sensor chip flow channel 50, and the dead-end structures 146 and 156 are formed. The main flow channel 30, the sub-flow channels 40, a part of the sensor chip flow channel 50, and the dead-end structures 146 and 156 are formed so as to be recessed from the upper surface 130a. Details of the main flow channel 30, sub-flow channels 40, sensor chip flow channel 50, and dead-end structures 146 and 156 will be described in the following.

As illustrated in FIG. 5, the sensor chip flow channel 50 is formed on the lower surface 130b. The sensor chip flow channel 50 is recessed from the lower surface 130b. Furthermore, through-holes 52 and 54 penetrating in the Z-axis direction are formed on the flow channel plate 130. The through-holes 52 and 54 each communicate with a part of the sensor chip flow channel 50 formed on the upper surface 130a and a part of the sensor chip flow channel 50 formed on the lower surface 130b.

As illustrated in FIG. 6, the lower surface 130b is formed with a recess 130c capable of accommodating components arranged on the substrate 110. The recess 130c is recessed from the lower surface 130b.

### [Main flow channel 30]

As illustrated in FIG. 2, the main flow channel 30 communicates with the first opening 10a and the second opening 20a, and forms a fluid flow from the first opening 10a to the second opening 20a. In FIGS. 2 to 4, the positions of the first opening 10a and the second opening 20a are indicated by a double-dot dash line. In FIGS. 2 to 4, a center line C11 is illustrated. The center line C11 is an imaginary straight line that extends in the Y-axis direction through the center of the main flow channel 30. In FIGS. 2 to 4, an imaginary straight line L11 connecting the first opening 10a and the second opening 20a when viewed in the Z-axis direction is illustrated. The main flow channel 30 is an example of the "first flow channel". The main flow channel 30 includes a pressure changer 80 configured to change the pressure of the fluid flowing through the main flow channel 30. The pressure changer 80 is disposed in the center of the main flow channel 30 in a longitudinal direction. Details of the pressure changer 80 will be described in the following.

The main flow channel 30 is curved when viewed in the Z-axis direction. Both ends of the main flow channel 30 are arranged at positions overlapping with the imaginary straight line L11, and the pressure changer 80 arranged at the center of the main flow channel 30 is arranged at a position so as to be away from the straight line L11. The main flow channel 30 is curved when viewed in the Z-axis direction to expand toward the side opposite to the sensor chip 101 relative to the straight line L11.

### [First curved portion 60]

The main flow channel 30 includes a first curved portion 60 formed upstream of the pressure changer 80 and a second curved portion 70 formed downstream of the pressure changer 80. The first curved portion 60 is disposed closer to the first opening 10a (on a side closer to the first opening 10a) as compared with the second opening 20a relative to the pressure changer 80 in the flow direction of the main flow channel 30. The flow direction of the main flow channel 30 may be a direction in which the main flow channel 30 continues or the longitudinal direction of the main flow channel 30.

The first curved portion 60 is curved to form an arc when seen in the Z-axis direction. The first curved portion 60 is curved so as to be away from the straight line L11. The center of curvature of the first curved portion 60 is disposed toward the sensor chip 101 (closer to the sensor chip 101) with respect to the first curved portion 60 as seen in the Z-axis direction. As illustrated in FIG. 3, in a cross section crossing the Z-axis direction, the first curved portion 60 includes a first surface 60a and a second surface 60b facing each other in a radius direction of the curvature of the first curved portion 60. The second surface 60b is disposed closer to the center of curvature O11 of the first curved portion 60 relative to the first surface 60a. The curvatures of the first surface 60a and the second surface 60b may be the same or different when seen in the Z-axis direction. The center of curvature O11 of the first curved portion 60 may be the center of curvature of the first surface 60a or the center of curvature of the second surface 60b. The center of curvature O11 of the first curved portion 60 may be the center of curvature of an imaginary curve passing through the center position between the first surface 60a and the second surface 60b.

### [Second curved portion 70]

As illustrated in FIGS. 2 and 4, the second curved portion 70 is disposed closer to the second opening 20a as compared with the first opening 10a, in the flow direction of the main flow channel 30.

The second curved portion 70 is curved to form an arc when seen in the Z-axis direction. The second curved portion 70 is curved so as to be away from the straight line L11 and extends toward the straight line L11 from the pressure changer 80 in the flow direction of the main flow channel 30. The second curved portion 70 may have a shape symmetrical to the first curved portion 60 with reference to the center line C11. The center of curvature of the second curved portion 70 is disposed closer to the sensor chip 101 with respect to the second curved portion 70 in the Z-axis direction. As illustrated in FIG. 4, the second curved portion 70 includes a first surface 70a and a second surface 70b facing each other in the direction along the radius of curvature of the second curved portion 70 in the cross section in the Z-axis direction. The second surface 70b is disposed closer to the center of curvature 012 of the second curved portion 70 as compared with the first surface 70a. The curvatures of the first surface 70a and the second surface 70b may be the same or different when seen in the Z-axis direction. The center of curvature 012 of the second curved portion 70 may be the center of curvature of the first surface 70a or the center of curvature of the second surface 70b. The center of curvature 012 of the second curved portion 70 may be the center of curvature of an imaginary curve passing through the center position between the first surface 70a and the second surface 70b.

### [Sub-flow channels 40]

As illustrated in FIG. 2, the sub-flow channels 40 include a sub-flow channel 41 branching from the first curved portion 60 and a sub-flow channel 42 branching from the second curved portion 70. The sub-flow channel 41 is an example of the "second flow channel" and the sub-flow channel 42 is an example of a "fourth flow channel". Part of the fluid flowing through the first curved portion 60 flows into the sub-flow channel 41. The fluid flowing through the sub-flow channel 41 flows through the sensor chip flow channel 50 and flows into the sub-flow channel 42. The fluid flowing through the sub-flow channel 42 flows into the second curved portion 70. The fluid flowing through the sub-flow channel 42 merges with the fluid flowing through the main flow channel 30.

### [Sub-flow channel 41]

As illustrated in FIG. 3, an opening 40a is formed on the second surface 60b of the first curved portion 60. The opening 40a is a connection portion between the first curved portion 60 and the sub-flow channel 41. The opening 40a is an example of the "third opening". The opening 40a is disposed closer to the pressure changer 80 as compared with a position P61 on the first surface 60a where an imaginary straight line L21 connecting the center of curvature O11 and the first surface 60a is the longest. The opening 40a is disposed downstream of the position P61 where the imaginary straight line L21 is the longest, in the flow direction of the main flow channel 30.

The sub-flow channel 41 includes a portion 141, a portion 142, and a portion 143 as illustrated in FIG. 2. The portion 141 is a portion connected to the main flow channel 30 and extends in the Y-axis direction. The portion 142 is bent from the portion 141 and extends away from the center line C11. The portion 142 extends in a direction crossing the X-axis direction and the Y-axis direction when viewed in the Z-axis direction. The portion 143 is bent from the portion 142 and extends in the Y-axis direction.

As illustrated in FIG. 3, the sub-flow channel 41 is formed to bend in a direction opposite to the flow direction of the first curved portion 60 of the first flow channel 30 from the opening (third opening) 40a when viewed in the Z-axis direction. The sub-flow channel 41 is bent in the Y-axis direction to approach the center of curvature O11.

### [Sub-flow channel 42]

As illustrated in FIG. 4, an opening 40b is formed on the second surface 70b of the second curved portion 70. The opening 40b is a connection portion between the second curved portion 70 and the sub-flow channel 42. The opening 40b is an example of a "fourth opening". The opening 40b is disposed closer to the pressure changer 80 as compared with a position P71 on the first surface 70a where an imaginary straight line L22 connecting the center of curvature 012 and the first surface 70a is the longest. The opening 40b is disposed upstream of the position P71 where the imaginary straight line L21 is the longest, in the flow direction of the main flow channel 30.

The sub-flow channel 42 includes a portion 151, a portion 152, and a portion 153 as illustrated in FIG. 2. The portion 151 is a portion connected to the main flow channel 30 and extends in the Y-axis direction. The portion 152 is bent from the portion 151 and extends in the direction away from the center line C11. The portion 152 extends in the direction crossing the X-axis direction and the Y-axis direction when viewed in the Z-axis direction. The portion 153 is bent from the portion 152 and extends in the Y-axis direction.

### [Sensor chip flow channel 50]

As illustrated in FIGS. 1, 2, and 5, the sensor chip flow channel 50 communicates with the sub-flow channels 40 and is a flow channel in which a detector 102 of the sensor chip 101 is arranged. The sensor chip flow channel 50 includes a connecting channel 51, the through-hole 52, a detection flow channel 53, the through-hole 54, and a connecting channel 55.

The connecting channel 51 is branched from the sub-flow channel 41 and extends in the X-axis direction. The through-hole 52 penetrates through the flow channel plate 130 in the Z-axis direction. The detector 102 of the sensor chip 101 is arranged in the detection flow channel 53. The through-hole 54 penetrates through the flow channel plate 130 in the Z-axis direction. The connecting channel 55 is branched from the sub-flow channel 42 and extends in the X-axis direction.

The fluid flowing through the sub-flow channel 41 flows through the connecting channel 51 and the through-hole 52 and flows into the detection flow channel 53. The fluid flowing through the detection flow channel 53 flows through the through-hole 54 and the connecting channel 55, and flows into the sub-flow channel 42.

### [Sensor chip 101]

The sensor chip 101 may be, for example, a flow sensor including a thermopile. The detector 102 of the sensor chip 101 includes a detection surface that contacts the fluid. The sensor chip 101 may be a sensor element manufactured by using micro electro mechanical system technology. "MEMS" is an abbreviation of the micro electro mechanical system. The detector 102 of the sensor chip 101 is arranged along an XY plane and contacts the fluid flowing through the sensor chip flow channel 50. The sensor chip 101 outputs an electric signal corresponding to the flow rate of the detected fluid. The sensor chip 101 may output an electric signal corresponding to the flow rate of the detected fluid. The sensor chip 101 may output an electric signal corresponding to the detected differential pressure of the fluid.

### [Pressure changer 80]

As illustrated in FIGS. 2 to 4, the pressure changer 80 is formed in the main flow channel 30 and is configured to change the pressure of the fluid flowing through the main flow channel 30. The pressure changer 80 is formed in the center of the main flow channel 30 in the flow direction and includes a contracted flow channel having a reduced cross-sectional area in a direction crossing the flow direction of the main flow channel 30. The opening width of the pressure changer 80 along the Y-axis direction is narrower as compared with the opening width of the upstream side and of a downstream side relative to the pressure changer 80 when viewed in the Z-axis direction. The cross-sectional area of the pressure changer 80 may be smaller as compared with the cross-sectional areas of the upstream side and downstream side. The pressure of the fluid flowing through the first curved portion 60 is higher as compared with the pressure of the fluid in the pressure changer 80.

### [Corner 144 between first curved portion 60 and sub-flow channel 41]

As illustrated in FIG. 3, as seen in the Z-axis direction, an angle θ11 at which the second surface 60b of the first curved portion 60 meets a wall surface 41a of the sub-flow channel 41 is an acute angle. The sub-flow channel 41 includes wall surfaces 41a and 41b facing each other in the X-axis direction as seen in the Z-axis direction. The wall surface 41a is a wall surface closer to the first opening 10a in the X-axis direction, and the wall surface 41b is a wall surface closer to the pressure changer 80.

### [Corner 154 between second curved portion 70 and sub-flow channel 42]

As illustrated in FIG. 4, an angle θ12 at which the second surface 70b of the second curved portion 70 meets a wall surface 42a of the sub-flow channel 42 is an acute angle when seen in the Z-axis direction. The sub-flow channel 42 includes wall surfaces 42a and 42b facing each other in the X-axis direction when seen in the Z-axis direction. The wall surface 42a is a wall surface closer to the second opening 20a in the X-axis direction, and the wall surface 42b is a wall surface closer to the pressure changer 80.

### [Enlarged flow channel 145]

As illustrated in FIG. 6, the sub-flow channel 41 includes an expanded flow channel 145. The expanded flow channel 145 decreases the flow velocity by expanding the opening width of the flow channel. In the expanded flow channel 145, the opening width is expanded in the Z-axis direction, for example. "The opening width is expanded" may mean that a cross-sectional area of a downstream flow channel is larger as compared with that of an upstream flow channel in the flow direction. The expanded flow channel 145 includes a slope 145a. The slope 145a is a wall surface of the flow channel, and the position on the upstream side relative to the slope 145a is arranged closer to the substrate 110 in the Z-axis direction as compared with the position on the downstream side relative to the slope 145a.

### [Step portion 56 in sensor chip flow channel 50]

As illustrated in FIGS. 1, 2, and 5, a step portion 56 is formed in the sensor chip flow channel 50. The step portion 56 includes a slope 56a, a step surface 56b, and a slope 56c. In the X-axis direction, the step surface 56b is disposed between the slope 56a and the slope 56c. As illustrated in FIG. 1, the step surface 56b faces the detector 102 of the sensor chip 101 in the Z-axis direction. The step surface 56b is disposed closer to the detector 102 of the sensor chip 101 as compared with the slope 56a and the slope 56c in the Z-axis direction. The step portion 56 may be formed on the substrate 110 on which the detector 102 of the sensor chip 101 is disposed.

As illustrated in FIG. 5, the detection flow channel 53 may be formed to form a substantially hexagonal shape when viewed in the Z-axis direction. The detection flow channel 53 is a recessed portion recessed from the lower surface 130b of the flow channel plate 130. Each of the slope 56a and the slope 56c is formed to form a substantially triangular shape when viewed in the Z-axis direction, and the step surface 56b is formed to form a rectangular shape. By widening the opening width of the detection flow channel 53 in the Y-axis direction as compared with the upstream side and the downstream side, rectification can be achieved, and thus, measurement accuracy by the sensor chip 101 can be enhanced.

The fluid flowing into the detection flow channel 53 through the through-hole 52 flows along the slope 56a, the step surface 56b, and the slope 56c. As illustrated in FIG. 1, in the Z-axis direction, the opening height of the flow channel in contact with the step surface 56b is smaller as compared with that of the flow channel in contact with the slope 56a. The fluid flowing along the slope 56a is accelerated and flows into the space between the step surface 56b and the sensor chip 101. The flow velocity of the fluid flowing through the space between the step surface 56b and the sensor chip 101 is the fastest among the flow velocities of the fluid flowing through the detection flow channel 53. The area of a cross section taken along the Z-axis direction of the flow channel in contact with the step surface 56b is smaller as compared with that of the flow channel in contact with the slopes 56a and 56c.

### [Dead-end structure 146]

As illustrated in FIGS. 2, 5, and 6, the sub-flow channel 41 includes the dead-end structure 146. The dead-end structure 146 is formed at a portion connected to the sensor chip flow channel 50. An opening 51a is formed at a connection portion between the sub-flow channel 41 and the sensor chip flow channel 50. The dead-end structure 146 communicates with the portion 143 of the sub-flow channel 41 and extends in the Y-axis direction. The dead-end structure 146 extends in the Y-axis direction further away from the main flow channel 30 relative to the opening 51a. The cross-sectional area of the dead-end structure 146 in a direction crossing the Y-axis direction may be equal to the cross-sectional area of the most downstream side relative to the expanded flow channel 145. Note that "the same" includes substantially the same. The dead-end structure 146 is a dead space communicating with the expanded flow channel 145. Some of the dust contained in the fluid flowing through the sub-flow channel 41 is deposited in the dead-end structure 146. Some of the dust is deposited in the dead-end structure 146 before flowing into the sensor chip flow channel 50. This reduces the amount of dust flowing into the sensor chip flow channel 50.

### [Flow channel symmetry in sensor apparatus 100]

As illustrated in FIG. 2, the flow channels in the sensor apparatus 100 are symmetrically formed with respect to the center line C11. Specifically, the main flow channel 30, the sub-flow channels 40, and the sensor chip flow channel 50 are symmetrically formed in the X-axis direction with respect to the center line C11. The first opening 10a and the second opening 20a are symmetrically arranged in the X-axis direction with respect to the center line C11. The first curved portion 60 and the second curved portion 70 are symmetrically arranged in the X-axis direction with respect to the center line C11. The sub-flow channel 41 and the sub-flow channel 42 are symmetrically arranged in the X-axis direction with respect to the center line C11. The pressure changer 80 is arranged so as to be symmetrical in the X-axis direction with respect to the center line C11.

As described above, the sensor apparatus 100 can be used in such a manner that fluid is allowed to flow in from the second opening 20a and discharged from the first opening 10a.

### [Expanded flow channel 155]

As illustrated in FIG. 5, the sub-flow channel 42 includes an expanded flow channel 155. The expanded flow channel 155 is formed symmetrically with an expanded flow channel 145 in the X-axis direction. The expanded flow channel 155 includes a slope 155a. The slope 155a is a wall surface of the flow channel, and the position upstream of the slope 155a is located closer to the substrate 110 in the Z-axis direction as compared with the position downstream of the slope 155a. In this case, the "upstream side" and the "downstream side" are the "upstream side" and the "downstream side" when the second opening 20a is used as an inlet and the fluid flow direction is in the opposite direction.

### [Dead-end structure 156]

As illustrated in FIGS. 2 and 5, the sub-flow channel 42 includes the dead-end structure 156. The dead-end structure 156 is formed symmetrically with the dead-end structure 146 in the X-axis direction. The dead-end structure 156 is formed in a portion connected to the sensor chip flow channel 50. An opening 55a is formed at a connection portion between the sub-flow channel 42 and the sensor chip flow channel 50. The dead-end structure 156 communicates with the portion 153 of the sub-flow channel 42 and extends in the Y-axis direction. The dead-end structure 156 extends in the Y-axis direction further away from the main flow channel 30 relative to the opening 55a. The cross-sectional area of the dead-end structure 156 in a direction crossing the Y-axis direction may be the same as the cross-sectional area of the most downstream side of the expanded flow channel 155. In this case, the "downstream side" is the downstream side when the second opening 20a is used as the inlet. When the second opening 20a is used as the inlet, some of the dust contained in the fluid flowing through the sub-flow channel 42 is deposited in the dead-end structure 156. Some of the dust is deposited in the dead-end structure 146 before flowing into the sensor chip flow channel 50.

### [Velocity distribution in first curved portion 60]

The velocity distribution in the first curved portion 60 will be described with reference to FIG. 3. The fluid flowing in from the first opening 10a flows into the first curved portion 60. Inside the first curved portion 60, the fluid flows along the first surface 60a and the second surface 60b.

The flow velocity of the fluid flowing closer to the first surface 60a is faster as compared with the flow velocity of the fluid flowing closer to the second surface 60b. The dust (particles) contained in the fluid flows closer to the first surface 60a as compared with the second surface 60b. The amount of dust flowing in the vicinity of the second surface 60b is smaller as compared with the amount of dust flowing in the vicinity of the first surface 60a. The amount of dust flowing into the sub-flow channel 40 through the opening 40a is smaller as compared with the amount of dust flowing into the pressure changer 80 without flowing into the sub-flow channel 40.

### [Flow velocity distribution in vicinity of opening 40a of sub-flow channel 41]

The fluid flowing into the sub-flow channel 41 from the first curved portion 60 flows along the wall surfaces 41a and 41b. The flow velocity near the wall surface 41a closer to the corner 144 is slower as compared with the flow velocity near the wall surface 41b farther from the corner 144.

### [Operation and effect of sensor apparatus 100 according to embodiment]

The sensor apparatus 100 according to the embodiment includes: the casing 120 in which the first opening 10a and the second opening 20a are formed; the main flow channel (first flow channel) 30 formed in the casing 120 and that communicates with the first opening 10a and the second opening 20a to form a flow of fluid from the first opening 10a to the second opening 20a; the pressure changer 80 formed in the main flow channel 30 and that changes the pressure of fluid flowing through the main flow channel 30; the sub-flow channel (second flow channel) 40 which branches from the first flow channel 30 on the upstream side relative to the pressure changer 80; and the sensor chip flow channel (third flow channel) 50 which communicates with the sub-flow channel 40 and in which the detector 102 of the sensor chip 101 is arranged, wherein the main flow channel 30 is formed upstream of the pressure changer 80; the first curved portion 60 includes the first curved portion (curved portion) 60 that forms an arc as viewed in the Z-axis direction (first direction), the first curved portion includes the first surface 60a and the second surface 60b facing each other in a direction along the radius of curvature of the first curved portion 60 (where the straight line L11 extends) in a cross section (XY plane) crossing the Z-axis direction, the second surface 60b is disposed closer to the center of curvature O11 of the first curved portion 60 as compared with the first surface 60a, and the opening (third opening) 40a that serves as a connection between the main flow channel 30 and the sub-flow channel 41 is formed in the second surface 60b.

In such a sensor apparatus 100, the fluid flowing in from the first opening 10a flows into the first curved portion 60 of the main flow channel 30. In the first curved portion 60, the flow velocity near the first surface 60a is faster as compared with the flow velocity near the second surface 60b. Most of the dust contained in the fluid flows closer to the first surface 60a. Thus, the amount of dust contained in the fluid flowing into the sub-flow channel 41 can be reduced. The dust flowing through the first curved portion 60 does not appreciably enter the opening 40a formed in the second surface 60b. As a result, dust flowing into the sensor chip flow channel 50 disposed downstream of the sub-flow channel 41 can be reduced.

In the sensor apparatus 100, the pressure changer 80 is formed downstream of the opening 40a, and the pressure of the fluid in the vicinity of the opening 40a can be made higher as compared with that in the pressure changer 80. As a result, a part of the fluid flowing through the main flow channel 30 can readily flow into the sub-flow channel 41 from the opening 40a. In the sensor apparatus 100, the pressure of the fluid in the vicinity of the opening 40a in the main flow channel 30 can be maintained higher as compared with the case where there is no pressure changer 80. Therefore, it is possible to prevent the fluid from not flowing into the sub-flow channel 40 from the main flow channel 30. In the sensor apparatus 100, the flow rate which can be detected by the sensor chip 101 can be secured.

In the sensor apparatus 100, the pressure changer 80 is formed in the center of the main flow channel 30 in the flow direction, and includes a contracted flow channel whose cross-sectional area in a direction crossing the flow direction (X-axis direction) of the main flow channel 30 is reduced. According to the sensor apparatus 100, by reducing the cross-sectional area in the pressure changer 80, the flow velocity can be increased and the pressure can be reduced. Thus, the pressure of the fluid in the vicinity of the opening 40a upstream of the pressure changer 80 can be maintained high. As a result, the inflow of the fluid from the opening 40a to the sub-flow channel 41 can be achieved.

In the sensor apparatus 100, the sub-flow channel 41 is formed to bend in the direction opposite to the flow direction of the main flow channel 30 from the opening 40a, with respect to the flow direction of the main flow channel 30 as viewed in the Z-axis direction. Thus, the flow rate of the fluid flowing into the sub-flow channel 41 from the opening 40a can be secured and the inflow of dust can be suppressed.

In addition, the sub-flow channel 41 includes the expanded flow channel 145 whose cross-sectional area in a direction crossing the flow direction of the sub-flow channel 41 is expanded. Thus, the flow velocity in the expanded flow channel 145 can be reduced and the retention of dust can be promoted.

In addition, the sub-flow channel 41 includes a branched flow channel formed in a portion connected to the sensor chip flow channel 50 and that is configured to include the dead-end structure 146. The "portion connected to the sensor chip flow channel 50" may be provided upstream of the opening 51a. By providing the dead-end structure 146 at the connection portion between the sub-flow channel 41 and the sensor chip flow channel 50, dust can be retained in the dead-end structure 146 and the entry of dust into the sensor chip flow channel 50 can be suppressed.

In the sensor apparatus 100, the cross-sectional area in the direction crossing the flow direction of the flow channel in contact with the detector 102 of the sensor chip 101 is smaller as compared with the cross-sectional area of the flow channel upstream or downstream of the flow channel in contact with the detector 102. Thus, the flow velocity in the flow channel in contact with the detector 102 can be increased and the adhesion of dust to the detector 102 can be suppressed. Therefore, the failure caused by the adhesion of dust to the sensor chip 101 can be suppressed.

In the sensor apparatus 100, the opening 40a is arranged on the pressure changer 80 side as compared with the position P61 on the first surface 60a where the straight line L11 connecting the center of curvature O11 and the first surface 60a is the longest. Thus, the inflow of dust from the opening 40a to the sub-flow channel 41 can be suppressed.

In the sensor apparatus 100, the corner 144 where the second surface 60b of the first curved portion 60 meets the wall surface (inner wall surface) 41a of the sub-flow channel 41 forms an acute angle (angle θ11) when viewed in the Z-axis direction. By forming an acute angle without setting the corner radius (R) in the corner portion, the inflow of dust from the first curved portion 60 to the sub-flow channel 41 can be suppressed. Note that the corner radius may be formed in the corner 144.

The sensor apparatus 100 further includes the sub-flow channel (fourth flow channel) 42 which branches from the main flow channel 30 on the downstream side relative to the pressure changer 80 and communicates with the sensor chip flow channel 50. The fluid flowing through the sensor chip flow channel 50 flows through the sub-flow channel 42 and flows into the main flow channel 30. The fluid can be returned from the sub-flow channel 42 to the main flow channel 30, and the fluid flowing through the main flow channel 30 can be discharged from the second opening 20a.

In the sensor apparatus 100, the direction connecting the first opening 10a and the second opening 20a is a second direction (X-axis direction), and the main flow channel 30, the sub-flow channels 40, and the sensor chip flow channel 50 are symmetrically formed with respect to the center line (center of the pressure changer 80) C11 in the X-axis direction when viewed in the Z-axis direction. Thus, the sensor apparatus 100 can be used by allowing the fluid to flow in from the first opening 10a and to be discharged from the second opening 20a, and also by allowing the fluid to flow in the opposite direction, that is, the fluid flows in from the second opening 20a and is discharged from the first opening 10a. The main flow channel 30, the sub-flow channels 40, and the sensor chip flow channel 50 may include an asymmetrically formed portion.

It should be noted that other embodiments in which other components are combined with the configuration and the like described in the above embodiment may be used, and the present invention is not limited to the configuration described above. On this point, changes are possible without departing from the spirit of the present invention, and determination may be made appropriately in accordance with the application.

In the above embodiment, the second curved portion 70 is formed downstream of the pressure changer 80, but the second curved portion 70 need not necessarily be formed downstream of the pressure changer 80.

The sensor apparatus 100 may include a plurality of first curved portions 60, and may include, for example, a flow channel formed linearly between the plurality of first curved portions 60 in a plan view.

In the description of the above embodiment, the second flow channel 40 is formed to bend in a direction opposite to the flow direction of the first flow channel 30 from the third opening 40a, but the sub-flow channel 40 need not necessarily be bent in the direction opposite to the flow direction of the first flow channel 30 from the third opening 40a.

In the above embodiment, the case where the expanded flow channel 145 is formed in the second flow channel 40 is exemplified, but the expanded flow channel 145 need not necessarily be formed in the second flow channel 40.

In the description of the above embodiment, the sensor apparatus 100 including the dead-end structures 146 and 156 is exemplified, but the sensor apparatus 100 need not necessarily include the dead-end structures 146 and 156.

## Claims

1. A sensor apparatus, comprising:
a casing in which a first opening and a second opening are formed;
a first flow channel formed in the casing and that communicates with the first opening and the second opening to form a flow of fluid from the first opening to the second opening;
a pressure changer formed in the first flow channel and that is configured to change the pressure of the fluid flowing through the first flow channel;
a second flow channel which branches from the first flow channel on an upstream side relative to the pressure changer; and
a third flow channel which communicates with the second flow channel and in which a detector of a sensor chip is arranged, wherein
the first flow channel includes a curved portion forming an arc as viewed in a first direction, the curved portion being formed upstream of the pressure changer,
in a cross section crossing the first direction, the curved portion includes a first surface and a second surface which face each other in a direction along a radius of curvature of the curved portion,
the second surface is disposed closer to a center of curvature of the curved portion as compared with the first surface, and
a third opening is formed in the second surface as a connection portion connecting the first flow channel and the second flow channel.

2. The sensor apparatus according to claim 1, wherein
the pressure changer is formed in a center of the first flow channel in a flow direction and includes a contracted flow channel having a reduced cross-sectional area in a direction crossing the flow direction of the first flow channel.

3. The sensor apparatus according to claim 1, wherein
the second flow channel is formed to bend in a direction opposite to a flow direction of the first flow channel from the third opening as viewed in the first direction.

4. The sensor apparatus according to claim 1, wherein
the second flow channel includes an expanded flow channel whose cross-sectional area in the direction crossing a flow direction of the second flow channel is expanded.

5. The sensor apparatus according to claim 1, wherein
the second flow channel includes a branched flow channel which is formed in a portion connected to the third flow channel, the branched flow channel being configured to include a dead-end structure.

6. The sensor apparatus according to claim 1, wherein
a cross-sectional area in the direction crossing a flow direction of a flow channel in contact with the detector of the sensor chip is smaller as compared with the cross-sectional area of the flow channel upstream or downstream of the flow channel in contact with the detector.

7. The sensor apparatus according to claim 1, wherein
the third opening is disposed on a pressure changer side relative to a position on the first surface where a line connecting the center of curvature and the first surface is the longest.

8. The sensor apparatus according to claim 3, wherein
a corner where the second surface of the first flow channel meets an inner wall surface of the second flow channel forms an acute angle as viewed in the first direction.

9. The sensor apparatus according to claim 1, further comprising:
a fourth flow channel which branches from the first flow channel on a downstream side relative to the pressure changer and communicates with the third flow channel.

10. The sensor apparatus according to claim 9, wherein
the direction connecting the first opening and the second opening is a second direction, and
the first flow channel, the second flow channel, the third flow channel, and the fourth flow channel are symmetrically formed as viewed in the first direction with respect to the center of the pressure changer in the second direction.
